# EUROPEAN PATENT SPECIFICATION

(11) **EP 2 677 222 B1**
(45) Date of publication and mention of the grant of the patent: **14.09.2016**
(21) Application number: 13172912.1
(22) Date of filing: 19.06.2013
(51) Int. Cl.: F16L 21/00, F16L 21/08, F16L 25/00

(54) **A system for channeling and distributing fluids in pressure or depression**
System zur Kanalisierung und Verteilung von Flüssigkeiten bei Über- oder Unterdruck
Système destiné à canaliser et à distribuer des fluides sous pression ou dépression

(30) Priority: 20.06.2012 IT MC20120058
(43) Date of publication of application: 25.12.2013
(73) Proprietor: C.T.A. S.R.L. Dei Fratelli Torresi, 62012 Civitanova Marche (MC) (IT)
(72) Inventor: Torresi, Simone, 62012 CIVITANOVA MARCHE (MC) (IT)
(74) Representative: Baldi, Claudio

(56) References cited:
- EP-A2- 0 919 758
- WO-A1-03/008851
- FR-A3- 2 663 400
- US-A- 4 535 821
- US-A- 5 769 460
- US-A1- 2003 089 674
- US-B1- 6 185 887

## Description

The present patent application for industrial invention relates to a system for channeling and distributing fluids in pressure or depression.

Various types of systems for channeling and distributing fluids in pressure or depression are known.

US4535821 discloses a valve for directing corrosive fluids; said valve is provided with a central cavity, four longitudinal side walls, four longitudinal corners, each of them being originated by a pair of adjacent side walls, and four longitudinal grooves in correspondence of said corners.

Said grooves are used to insert connection beams to connect said valves in side-by-side or consecutive position.

Said beams have the specific function to connect two valves, as mentioned above, and therefore:
- they must be necessarily positioned on the side walls of the valves and protrude from them;
- they must have an H-shaped section;
- they must extend for the entire length of the groove.

FR2663400 discloses consecutive tubes connected by means of plates, each of them being screwed to both consecutive tubes in correspondence of the adjacent ends.

Said tubes have longitudinal grooves along the four external walls.

Said tubes have a circular central cavity, two opposite short walls and two opposite long walls; said opposite long walls have a higher length than the short walls, given the fact that they are provided with the grooves for connection of two tubes in consecutive position.

The higher length is necessary to house a bigger plate inside the groove, in order to generate a larger fixing surface inside the tube both for the plate and the screws used to fix the plate inside the groove.

US5769460 discloses tubes for distribution fluids in pressure or depression, comprising fixing means between a pair of extruded consecutive tubes, adapted to cooperate with longitudinal grooves.

Each longitudinal groove has a T-shape and said fixing means comprise at least one plate inserted into an aligned pair of longitudinal grooves of two different tubes.

Patent application EP0919758 discloses a system that comprises consecutive tubes connected by means of a fixing clamp, which cooperates with pairs of grooves provided on said pairs of consecutive tubes.

The grooves of said tubes have a basically U-shaped section.

Evidently, the use of said fixing clamps determines a scarcely stable tube fixing, due to the reduced fixing surface for both the fixing clamp and the head of the screws used to fix the fixing clamp.

Patent application GB2246609A discloses a system comprising consecutive tubes connected by means of plates, each of them being screwed with fixing screws to both consecutive tubes at the adjacent ends.

Said tubes are provided with longitudinal grooves along the four external walls, adapted to receive the nut of said fixing screws.

Evidently, the position of said longitudinal grooves determines the parallel direction of the stems of said fixing screws with respect to the tube walls.

Said parallel direction of the stems of the fixing screws determines an unbalanced distribution of the forces exerted by said screws and, therefore, the unstable fixing of said plates to the tubes.

Moreover, it must be noted that both the plate and the heads of said fixing screws protrude from the tubes, thus causing a bulky volume and poor versatility of the system.

WO03/008851 **discloses a device for connecting and blocking hollow elements used as piping for fluids. The hollow elements are connectable by plugs or anchoring plates and connecting plate, engaging at least one wall of adjacent elements and fixed by anchoring screws.**

The purpose of the present invention is to eliminate the drawbacks of the prior art by devising an extruded profiled tube that:
- can be coupled with extruded profiled tubes provided with T-section longitudinal notches on the lateral walls, in the proximity of a corner;
- comprises fixing means adapted to cooperate with housings provided on the extruded tubes; said housings providing a larger support surface both for the connection plate of the consecutive profiled tubes and for the head of the fixing screws used to fix said connection plate;
- has a square section in which no side is substantially longer than the other sides, as shown in FR2663400;
- the distance between a pair of parallel opposite sides has a value higher than the diameter of the central hole comprised between 3% and 7% with respect to the diameter of the central hole (if the diameter of the hole is 100mm, then the side of the square is from 106 to 114mm);
- all thickness values of the extruded profiled tube are basically identical.

The thickness requirement is due to the fact that, when producing said tubes with hot extrusion processes, serious problems are encountered in terms of shrinkage with sections of different thickness.

Said problems consist in tube ovaling or fragility of sections with lower thickness, especially of the sections that define the longitudinal grooves inside which the connection plates must be inserted between a pair of identical consecutive profiled tubes.

Another purpose of the present invention is to reduce the volume of a pair of said profiled tubes in assembled condition.

The system of the invention comprises:
- at least one pair of consecutive profiled tubes that are mutually connected, each of them comprising at least one central hole, four longitudinal side walls and four longitudinal corners, each of them being originated by a pair of adjacent longitudinal side walls; each of said profiled tubes being provided, in the proximity of at least one of said longitudinal corners, with two longitudinal grooves, each of them being obtained on one of the two adjacent longitudinal side walls that originate said longitudinal corner; said longitudinal grooves comprising a cavity, an opening and a pair of lateral wings that define said opening;
- fixing means that connect said pair of consecutive profiled tubes.

The innovative characteristic of the system according to the present invention consists in the fact that at least one corner of each profiled tube comprises an angular groove obtained on the same corner, in intermediate position between the two longitudinal grooves obtained in the proximity of the same corner; said angular groove comprises a cavity, an opening and a pair of lateral wings that define such an opening; such angular groove is provided with a basically T-shaped section inclined by 45° towards the center of the profiled tube; said fixing means cooperate with said longitudinal grooves and/or said angular grooves.

For explanatory reasons, the description of the system according to present invention continues with reference to the attached drawings, which only have illustrative, not limiting value, wherein:
- Figure 1 is an axonometric view of the system according to invention;
- Figure 2 is a cross-sectional view along plane I-II of the system according to the invention shown in Fig. 1.

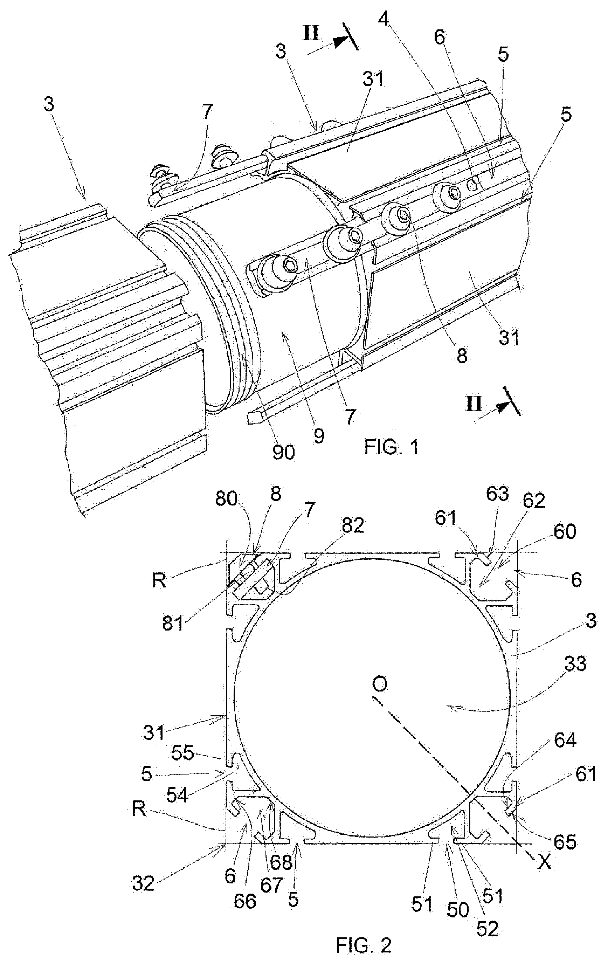

Referring to Figs. 1 and 2, said system comprises profiled tubes (3).

Each profiled tube (3) is provided with a central hole (33), four longitudinal side walls (31) and four longitudinal corners (32).

Each longitudinal corner (32) is originated by a pair of adjacent side walls (31).

Two longitudinal grooves (5) are provided in the proximity of each longitudinal corner (32) of the tube (3).

Referring to Fig. 2, said longitudinal grooves (5) are provided with opening (50) and cavity (52).

Said opening (50) is defined by the ends (53) of two longitudinal locking wings (51) in opposite aligned position; each of said longitudinal wings (51) comprises an internal side (54) directed towards the cavity (52) of the longitudinal groove (5), and an external side (55) directed towards the corner (32) of said profiled tube (3).

As shown in Fig. 2, the corners (32) of the profiled tube (3) comprise an angular groove (6) obtained on the same corner (32), in intermediate position between the two longitudinal grooves (5) obtained in the proximity of the corner (32); said angular groove (6) comprises a cavity (62), an opening (60) and a pair of longitudinal wings (61) defining said opening (60).

Said cavity (62) comprises a rectangular portion (66) and a trapezoidal portion (67) provided with bottom wall (68) opposite to the opening (60).

Referring to Figs. 1 and 2, the system comprises fixing means (7, 8) adapted to connect two consecutive profiled tubes (3) and cooperate with said longitudinal (5) and/or angular grooves (6).

Said fixing means (7, 8) comprise a connection plate (7) inserted inside an aligned pair of said longitudinal grooves (5) or inside an aligned pair of said angular grooves (5) of two consecutive profiled tubes (3).

Referring to Fig. 2, when the connection plate (7) is locked inside an angular groove (6), it is housed inside the rectangular portion (66) of the cavity (62) of said angular groove (6) and it is stopped against the internal sides (64) of the longitudinal locking wings (61).

Referring to Figs. 1 and 2, each connection plate (7) is provided with threaded holes (4) to receive the locking screws (8) used to lock said connection plate (7) inside the pair of grooves (5,6).

Referring to Fig. 2, each locking screw (8) comprises a head (80) and a threaded stem (81) with free end (82).

Once the locking screw (8) is screwed inside the threaded hole (4) provided on the connection plate (7), the head (80) of said locking screw (8) is stopped against the external sides (65) of said longitudinal wings (61); said longitudinal wings (61) are therefore positioned and tightened between the head (80) of the locking screw (8) and the connection plate (7).

Still referring to Fig. 2, said longitudinal wings (61) are aligned along a straight line with orthogonal direction with respect to a radial dimension (X).

When the head (80) of the locking screw (8) is perfectly stopped against the external sides (65) of the longitudinal wings (61) of the angular groove (6), the stem (81) of the locking screw (8) is directed along the radial direction (X) and the free end (82) of said stem (81) is situated in the trapezoidal portion (67) of the cavity (62) at a short distance from the bottom wall (68).

Fig. 2 shows an embodiment of the installation according to the invention that comprises locking screws (8) with flared head (80).

When using locking screws (8) with flared head (80) inside said new angular grooves (6), said head (80) remains inside an imaginary rectangle (R), the sides of which coincide with the longitudinal lateral walls (31) of the tube (3), as shown in Fig. 2.

The use of a locking screw with flared head in the system according to the present invention makes it possible to reduce the volume of a pair of said profiled tubes (3) in assembled condition.

Referring to Fig. 1, the system advantageously comprises a cylindrical coupling (9) with two seal rings (90) in the proximity of its ends, adapted to ensure the seal of the fluid contained inside the profiled tubes (3) in the connection point of said consecutive profiled tubes (3).

Numerous variations and modifications can be made to the present embodiments of the invention, within the reach of an expert of the field, while still falling within the scope of the invention described in the enclosed claims.

## Claims

1. A system for channeling and distributing fluids in pressure or depression comprising:
- at least one pair of consecutive profiled tubes (3) that are mutually connected, each of them comprising at least one central hole (33), four longitudinal side walls (31) and four longitudinal corners (32), each of them originated by a pair of adjacent longitudinal side walls (31); each of said profiled tubes (3) being provided, in the proximity of at least one of said longitudinal corners (32), with two longitudinal grooves (5), each of them being obtained on one of the two adjacent longitudinal side walls (31) that originate said longitudinal corner (32); said longitudinal grooves (5) comprising a cavity (52), an opening (50) and a pair of lateral wings (51) that define said opening (50);
- fixing means (7, 8) that connect said pair of consecutive profiled tubes (3); wherein said fixing means (7, 8) comprise at least one connection plate (7) and locking screws (8) screwed onto said connection plate (7);
system **characterized in that** at least one corner of each profiled tube (3) comprises an angular groove (6) obtained on the corner (32), in intermediate position between the two longitudinal grooves (5) obtained in the proximity of the same corner (32); said angular groove (6) comprises a cavity (62), an opening (60) and a pair of lateral wings (51) that define such an opening (60); such angular groove (6) is provided with a basically T-shaped section inclined by 45° towards the center of the profiled tube (3); said fixing means (7, 8) cooperate with said angular grooves (6),
said connection plate (7) of the fixing means being inserted into the cavity (62) of an angular groove (6),
said longitudinal wings (61) of the angular groove (6) comprise an internal side (64) directed towards the cavity (62) of the angular grove and an external side (65) directed outwards; said locking screw (8) of the fixing means comprising a head (80) and a threaded stem (81); the head (80) of said locking screw (8) being stopped against the external side (65) of the longitudinal wings (61) of the opening (60) of said angular grooves (6); the head (80) of said locking screw (8) being flared and remaining inside an imaginary rectangle (R), the sides of the imaginary rectangle (R) coincide with the longitudinal side walls (31) of the profiled tube (3).

2. The system of claim 1, wherein said fixing means (7, 8) cooperate with said longitudinal grooves (5).

3. The system of claim 2, wherein said connection plate (7) of the fixing means is inserted into the cavity (52) of a longitudinal groove (5).

4. The system of claim 1, wherein the stem (81) of the locking screw (8) is in orthogonal direction to the connection plate (7); said stem (81) of the locking screw (8) comprising a free end (82); said cavity (52) sectionally comprising a rectangular portion (66) and a trapezoidal portion (67), comprising a bottom wall (68) opposite to the opening (61); said plate (7) being situated inside said rectangular portion (66) and said free end (82) of said stem (81) being disposed in the trapezoidal portion (67) of the cavity (62).

5. The system of any one of the preceding claims, comprising a cylindrical coupling (9) exactly inserted inside the two central holes (33) of two consecutive profiled tubes (3) in order to ensure seal.

6. The system of claim 5, wherein said cylindrical coupling (9) comprises two seal rings (90) in the proximity of its two ends.

7. The system of any one of the preceding claims, wherein the distance between a pair of parallel side walls (31) of the profiled tube (3) is higher than the diameter of the central hole (33) by a value comprised between 3% and 7% with respect to the diameter of said central hole (33).

8. The system of any one of the preceding claims, wherein the tube has a square section.

## Patentansprüche

1. System zur Kanalisierung und Verteilung von druckbeaufschlagten oder unterdruckbeaufschlagten Flüssigkeiten, umfassend:
- mindestens ein Paar von hintereinander angeordneten und miteinander verbundenen Profilrohren (3), die jeweils mindestens ein zentrales Loch (33), vier Längsseitenwände (31) und vier Längskanten (32) umfassen, die jeweils aus einem Paar von angrenzenden Längsseitenwände (31) entstehen; wobei jedes der Profilrohre (3) in der Nähe von mindestens einer seiner Längskanten (32) zwei Längsnuten (5) aufweist, die jeweils in einer der beiden angrenzenden Längsseitenwände (31) herausgearbeitet sind, die die Längskanten (32) bilden; wobei die Längsnuten (5) einen Hohlraum (52), eine Öffnung (50) und ein Paar von seitlichen Flügeln (51) umfassen, die die Öffnung (50) definieren;
- Befestigungsmittel (7, 8), die das Paar von hintereinander angeordneten Profilrohren (3) verbinden; wobei die Befestigungsmittel (7, 8) mindestens eine Verbindungsplatte (7) und Befestigungsschrauben (8) umfassen, die in die Verbindungsplatte (7) eingeschraubt sind;
welches System **dadurch gekennzeichnet ist, dass** mindestens eine der Kanten eines jeden Profilrohrs (3) eine Winkelnut (6) umfasst, die an der Kante (32) in einer Stellung zwischen den beiden Längsnuten (5) herausgearbeitet ist, die in der Nähe der Kante (32) herausgearbeitet sind; wobei die Winkelnut (6) einen Hohlraum (62), eine Öffnung (60) und Paar von seitlichen Flügeln (61) umfasst, die die Öffnung (60) definieren; wobei die Winkelnut (6) einen im Wesentlichen T-förmigen, zur Mitte des Profilrohrs (3), um 45° abgeschrägten Querschnitt aufweist; wobei die Befestigungsmittel (7, 8) mit der Winkelnut (6) zusammenwirken,
wobei die Verbindungsplatte (7) ins Innere des Hohlraums (62) einer Winkelnut (6) eingefügt ist,
wobei die Längsflügel (61) der Winkelnut (6) eine Innenfläche (64) umfassen, die dem Hohlraum (62) der Winkelnut zugewandt ist, und eine Außenfläche (65), die nach außen gerichtet ist; wobei die Befestigungsschraube (8) der Befestigungsmittel einen Kopf (80) und einen Gewindeschaft (81) umfasst; wobei der Kopf (80) der Befestigungsschraube (8) auf der Außenfläche (65) der Längsflügel (61) der Öffnung (60) der Winkelnut (6) in Anschlag geht; da der Kopf (80) der Befestigungsschraube (8) aufgeweitet ist und innerhalb eines imaginären Rechtecks (R) bleibt, fallen die Seiten des imaginären Rechtecks (R) mit den Längsseitenwänden (31) des Profilrohrs (3) zusammen.

2. System nach Anspruch 1, wobei die Befestigungsmittel (7, 8) mit den Längsnuten (5) zusammenwirken.

3. System nach Anspruch 2, wobei die Verbindungsplatte (7) der Befestigungsmittel (7, 8) ins Innere des Hohlraums (52) einer Längsnut (5) eingefügt ist.

4. System nach Anspruch 1, wobei die zweite Richtung, in die der Schaft (81) der Befestigungsschraube (8) ausgerichtet ist, senkrecht zu der Richtung steht, in die die Verbindungsplatte (7) ausgerichtet ist; wobei der Schaft (81) der Befestigungsschraube (8) ein freies Ende (82) umfasst; wobei der Hohlraum (52), der im Querschnitt einen rechtwinkligen Abschnitt (66) und einen trapezförmigen Abschnitt (67) umfasst, eine Bodenwand (68) umfasst, die der Öffnung (61) gegenüberliegt; wobei die Platte (7) im Inneren des rechtwinkligen Abschnitts (66) angeordnet ist und das freie Ende (82) des Schafts (81) im trapezförmigen Abschnitt (67) des Hohlraums (62) angeordnet ist.

5. System nach einem der vorstehenden Ansprüche, das eine zylindrische Verbindung (9) umfasst, die exakt ins Innere des zentralen Loches (33) der beiden hintereinander angeordneten Profilrohre (3) eingefügt ist, um die Abdichtung zu gewährleisten.

6. System nach Anspruch 5, wobei die zylindrische Verbindung (9) zwei Dichtringe (90) in der Nähe ihrer beiden Enden umfasst.

7. System nach einem beliebigen der vorstehenden Ansprüche, wobei der Abstand zwischen einem Paar von parallelen Seitenwänden (31) des Profilrohrs (3) größer als der Durchmesser des zentralen Loches (33) ist, und zwar um einen Wert, der zwischen 3 % und 7 % bezogen auf den Durchmesser des zentralen Loches (33) liegt.

8. System nach einem beliebigen der vorstehenden Ansprüche, wobei das Rohr einen quadratischen Querschnitt aufweist.

## Revendications

1. Système pour canaliser et distribuer des fluides sous pression ou en dépression comprenant :
- au moins une paire de tuyaux profilés (3) consécutifs et raccordés entre eux, chacun desquels comprenant au moins un orifice central (33), quatre parois latérales longitudinales (31) et quatre angles longitudinaux (32), chacun créé par une paire de parois latérales longitudinales (31) adjacentes ; chacun des dits tuyaux profilés (3) présentant, à proximité d'au moins l'un des dits angles longitudinaux (32), deux rainures longitudinales (5), chacune desquelles est réalisée sur l'une des deux parois latérales longitudinales (31) adjacentes qui créent ledit angle longitudinal (32) ; lesdites rainures longitudinales (5) comprenant une cavité (52), une embouchure (50) et une paire d'ailettes latérales (51) qui délimitent ladite embouchure (50) ;
- des moyens d'accrochage (7, 8) qui relient ladite paire de tuyaux profilés (3) consécutifs ; où lesdits moyens d'accrochage (7, 8) comprennent au moins une plaquette de raccordement (7) et des vis de blocage (8), vissées sur ladite plaquette de raccordement (7) ;
système **caractérisé en ce que** au moins l'un des angles de chaque tuyau profilé (3) comprend une rainure angulaire (6), réalisée sur l'angle (32), en assiette interposée par rapport aux deux rainures longitudinales (5) réalisées à proximité de l'angle (32) même ; ladite rainure angulaire (6) comprenant une cavité (62), une embouchure (60) et une paire d'ailettes latérales (61) qui délimitent ladite embouchure (60) ; ladite rainure angulaire (6) présentant une section essentiellement en forme de « T » incliné de 45° vers le centre du tuyau profilé (3) ; lesdits moyens d'accrochage (7, 8) coopérant avec lesdites rainures angulaires (6)
ladite plaquette de raccordement (7) étant enfilée à l'intérieur de la cavité (62) d'une rainure angulaire (6),
lesdites ailettes longitudinales (61) de la rainure angulaire (6) comprennent une face intérieure (64), orientée vers la cavité (62) de la rainure angulaire et une face extérieure (65), orientée vers l'extérieur ; ladite vis de blocage (8) des moyens d'accrochage comprenant une tête (80) et une tige filetée (81) ; la tête (80) de ladite vis de blocage (8) étant en butée sur la face extérieure (65) des ailettes longitudinales (61) de l'embouchure (60) des dites rainures angulaires (6) ; la tête (80) de ladite vis de blocage (8) étant évasée et restant à l'intérieur d'un rectangle imaginaire (R), les côtés du rectangle imaginaire (R) coïncident avec les parois latérales longitudinales (31) du tuyau profilé (3).

2. Système, selon la revendication 1, où les moyens d'accrochage (7, 8) coopèrent avec lesdites rainures longitudinales (5).

3. Système, selon la revendication 2, où ladite plaquette de raccordement (7) des moyens d'accrochage est enfilée à l'intérieur de la cavité (52) d'une rainure longitudinale (5).

4. Système, selon la revendication 1, où la direction d'orientation de la tige (81) de la vis de blocage (8) est orthogonale à la direction d'orientation de la plaquette de raccordement (7) ; ladite tige (81) de la vis de blocage (8) comprenant une extrémité libre (82) ; ladite cavité (52), en section, comprenant une portion rectangulaire (66) et une portion trapézoïdale (67), comprenant une paroi de fond (68) opposée par rapport à l'embouchure (61) ; ladite plaquette (7) étant placée dans ladite portion rectangulaire (66) et ladite extrémité libre (82) de ladite tige (81) étant disposée dans la portion trapézoïdale (67) de la cavité (62).

5. Système, selon l'une des revendications précédentes, comprenant un joint cylindrique (9) exactement inséré à l'intérieur de deux orifices centraux (33) de deux tuyaux profilés (3) consécutifs, afin d'en assurer l'étanchéité.

6. Système, selon la revendication 5, où ledit joint cylindrique (9) comprend deux bagues d'étanchéité (90) à proximité de ses deux extrémités.

7. Système, selon l'une des revendications précédentes, où la distance entre une paire de parois latérales (31) parallèles du tuyau profilé (3) est majeure du diamètre de l'orifice central (33) pour une valeur comprise entre 3% et 7% par rapport au diamètre du dit orifice central (33).

8. Système, selon l'une des revendications précédentes, où le tuyau a une section carrée.
